**Europäisches Patentamt**

**European Patent Office**

**Office européen des brevets**

(11) Veröffentlichungsnummer: **0 029 119**
**B1**

(12) # EUROPÄISCHE PATENTSCHRIFT

(45) Veröffentlichungstag der Patentschrift:
26.02.86

(21) Anmeldenummer: 80106170.6

(22) Anmeldetag: 10.10.80

(51) Int. Cl.⁴: **B 29 C 55/12,** C 08 J 5/18,
H 01 G 4/18, H 01 B 3/44

(54) **Verfahren zu Herstellung einer rauhen Elektroisolierfolie aus Polypropylen.**

(30) Priorität: 19.10.79 DE 2942298

(43) Veröffentlichungstag der Anmeldung:
27.05.81 Patentblatt 81/21

(45) Bekanntmachung des Hinweises auf die Patenterteilung:
26.02.86 Patentblatt 86/9

(84) Benannte Vertragsstaaten:
AT BE CH DE FR GB IT LI LU NL SE

(56) Entgegenhaltungen:
EP - A - 0 008 623
DE - A - 2 149 888
DE - A - 2 722 087
FR - A - 2 364 752
US - A - 3 746 953

(73) Patentinhaber: **HOECHST AKTIENGESELLSCHAFT,**
**Postfach 80 03 20, D-6230 Frankfurt am Main 80 (DE)**

(72) Erfinder: **Crass, Günther, Bachstrasse 7,**
**D-6204 Taunusstein 4 (DE)**
Erfinder: **Hensel, Hartmut, Dr., Am Hohen Stein 38,**
**D-6200 Wiesbaden (DE)**

**Beschreibung**

Die vorliegende Erfindung betrifft ein Verfahren zur Herstellung einer rauhen Polypropylen-Elektroisolierfolie, bei dem eine schmelzextrudierte Vorfolie unter solchen Bedingungen abgekühlt wird, daß in dieser β-Kristallite entstehen, diese dann bei einer solchen Temperatur biaxial verstreckt wird, daß β-Kristallite in α-Kristallite umgewandelt werden, diese dann thermofixiert, gegebenenfalls metallisiert und aufgewickelt wird.

Für imprägnierte Kondensatoren werden heute üblicherweise die Kombinationen Papier-Aluminium bzw. Papier-Polypropylenfolie-Aluminium oder Papier-metallisierte Polypropylenfolie eingesetzt. Aus solchen Kombinationen hergestellte Kondensatoren sind jedoch relativ voluminös. Im Zuge der immer geringer werdenden Größe elektrischer Bauteile geht die Entwicklung in Richtung von Kondensatoren, die nur noch aus Polypropylenfolien und Aluminium bzw. aus metallisierten Polypropylenfolien bestehen und die als all-Film-Kondensatoren bezeichnet werden.

Polypropylenfolien haben im Vergleich zu dem bisher verwendeten Isolierpapier einen ausgezeichneten Isolationswiderstand und hervorragende dielektrische Eigenschaften. Die herkömmlichen Polypropylenfolien sind jedoch sehr glatt und neigen dazu, aneinander zu haften, so daß bei einem hieraus gewickelten Kondensator die zwischen den Folienlagen befindliche Luft durch Imprägnieren nicht oder nur unvollständig verdrängt werden kann. Ein solcher Kondensator ist jedoch wertlos, da selbst bei niedrigen Spannungen im nicht imprägnierten Bereich Kurzschlüsse und Durchschläge auftreten.

Um Polypropylenfolien enthaltende Kondensatoren besser tränkbar zu machen, sind Verfahren entwickelt worden, bei denen man durch eine gezielte Beeinflussung der Morphologie (β-α-Kristallitumwandlung) die Polypropylenfolien aufgerauht hat. Solche Verfahren sind in den DE-OSn 25 53 693, 26 01 810 und 27 22 087 beschrieben. Wenn auch die Imprägnierung von Kondensatoren, die aus solchen Folien hergestellt sind, verbessert werden konnte, so können doch unimprägnierte Bereiche nicht völlig ausgeschlossen werden, wobei es dann weiterhin zu den oben geschilderten Nachteilen bei der Verwendung der glatten Folien kommt.

Diese Tatsache hat ihre Ursache darin, daß diese Folien über die gesamte Oberfläche eine völlig regellose Oberflächenstruktur aufweisen. Beim Imprägnieren ergeben sich für das Imprägniermedium die Fließwege rein zufällig, wodurch ungetränkte Zonen und dadurch Lufteinschlüsse nicht mit Sicherheit auszuschließen sind.

Es stellte sich somit die Aufgabe, ein Verfahren zur Herstellung einer rauhen, biaxial gestreckten Polypropylenfolie zum Einsatz auf dem Elektroisoliersektor zu schaffen, die im gewickelten oder gefalteten Zustand vollständig und schnell ohne Hinterlassen von Lufteinschlüssen zwischen den Schichten mit dem Imprägniermedium ausgefüllt werden kann und somit die Nachteile der Folien nach dem Stand der Technik nicht aufweist.

Gelöst wird die vorstehend genannte Aufgabe durch eine Verfahren der eingangs genannten Gattung, dessen kennzeichnende Merkmale darin bestehen, daß die Vorfolie vor dem Streckvorgang auf einer gerasterten Abzugswalze in aneinandergrenzenden Bereichen so unterschiedlich abgekühlt und/oder auf einer gerasterten Streckwalze in aneinandergrenzenden Bereichen so unterschiedlich erwärmt wird, daß auf der Folie Bereiche mit unterschiedlicher Rauhigkeit entstehen, wobei die Bereiche mit hoher Rauhigkeit miteinander verbundene Kanäle bilden.

Durch die von den Bereichen mit hoher Rauhigkeit gebildeten feinen Kanäle wird beim Imprägnieren bei Kondensatoren oder Kabelummantelungen eine Dochtwirkung erzielt, wodurch sich eine vollständige und schnelle Imprägnierung ergibt.

Die Rauhigkeitsunterschiede zwischen den Bereichen mit höherer und niedrigerer Rauhigkeit liegen vorzugsweise zwischen den Faktoren 1,5 bis 5,0.

Wenn auch kleinere Bereiche nicht ausgeschlossen sind, so liegen die Abmessungen der Bereiche insbesondere bei $\geqq 0{,}1$ mm².

Es hat sich in der Praxis gezeigt, daß insbesondere solche Folien besonders gut imprägnierbar sind, bei denen die Bereiche mit der höheren Rauhigkeit überwiegen.

Obwohl auch andere Werte nicht ausgeschlossen werden sollen, so werden bevorzugt Folien hergestellt, deren mittlere Rauhtiefe $R_z$ in den Bereichen mit der höheren Rauhigkeit zwischen 1,0 und 4,0 μm und in den Bereichen mit der niedrigeren Rauhigkeit zwischen 0,1 und 1,0 μm liegt.

Da die Folien nach dem Herstellungsverfahren normalerweise in Längsrichtung zu Schmalschnitten aufgeteilt werden, die anschließend z.B. zu einem Kondensator gewickelt werden und diese von den Stirnseiten her getränkt werden, sind Folien bevorzugt, deren feine Kanäle eine Vorzugsrichtung quer zur Längserstreckung der Folienbahn aufweisen.

Insbesondere werden auch Folien verwendet, die einseitig metallisiert sind, da hierdurch vermieden wird, den Kondensator aus zwei verschiedenen Bahnen, nämlich Metall und Folie zu wickeln oder zu falten.

Die Folien können selbstverständlich auf den beiden Oberflächen unterschiedliche Rauhigkeiten und Rauhigkeitsverhältnisse aufweisen, jedoch muß die Rauhtiefe insgesamt so niedrig liegen, daß sich beim Strecken in der ersten Streckstufe kein Prägeeffekt einstellt, wodurch die mechanischen Festigkeiten der Folien leiden würden, was als Nachteil anzusehen ist.

Die Erfindung betrifft ein Verfahren zur Herstellung der Folie, bei dem man sich der herkömmlichen Flachfolienstreckprozesse, nämlich Quer-Längs-Streckung, Simultanstreckung, Längs-Quer-Streckung bedient. Je nach gewünschtem Einsatz kann auch eine bekannte Nachstreckung in Quer- oder Längsrichtung oder Simultan durchgeführt werden, um die gewünschten mechanischen Eigenschaften, wie Reißfestigkeit, Reißdehnung, E-Modul u.a. zu optimieren.

Das Verfahren wird derart durchgeführt, daß man die Abzugswalze gezielt strukturiert. Dies kann z.B. durch Sandstrahlen, anschließende Verchromung und Abschleifen auf eine definierte Rauhigkeit ebenso erfolgen wie über eine gezielte Verchromung nur eines Teilbereiches der Oberfläche bzw. über die Abdeckung partieller Bereiche (Rasterwalze).

Durch die unterschiedliche Abkühlung der Schmelze auf der strukturierten Walze werden in aneinandergrenzenden Bereichen unterschiedlich viele β-Kristallite erzeugt, die bei der nachfolgenden Umwandlung zu α-Kristalliten zu unterschiedlichen Rauhigkeiten führen. Eine solche Verfahrensführung ist besonders dann gut geeignet, wenn anschließend eine Simultanstreckung durchgeführt wird.

Alternativ hierzu kann jedoch auch eine entsprechend strukturierte beheizte Walze vor dem ersten Streckvorgang eingebaut werden, mit der die Vorfolie infolge der Strukturierung unterschiedlich erwärmt wird. Beim Längs-Querstreckprozeß ist bevorzugt die erste Streckwalze strukturiert als Rasterwalze ausgebildet. Denkbar ist jedoch auch die Kombination beider Verfahren miteinander.

Die Extrusion des Polypropylens erfolgt bei 240 bis 300° C, bevorzugt bei 250 bis 270° C.

Der erste Streckschritt wird bei einer Temperatur von 120 bis 160° C, bevorzugt bei 135 bis 150° C, durchgeführt.

Das Längsstreckverhältnis beträgt 1 : 4,0 bis 6,5, bevorzugt 1 : 4,5 bis 6.0.

Das Querstreckverhältnis beträgt 1 : 8,0 bis 12,0, bevorzugt 1 : 8,5 bis 10,5.

Die Thermofixierung des biaxial gestreckten Films wird bei 150 bis 180° C, bevorzugt bei 155 bis 165° C durchgeführt.

Die erfindungsgemäßen Filme in einer Stärke von 4 bis 30 μm, bevorzugt von 8 bis 20 μm, wurden insbesondere zur Herstellung von Kondensatoren verwendet, wobei sich ergab, daß sich die Kondensatoren wesentlich schneller und besser imprägnieren ließen als solche, die mit Folien nach dem Stand der Technik hergestellt worden waren. Bei mehreren hundert mit der erfindungsgemäßen Folie hergestellten Kondensatoren wurden keinerlei Ausfälle infolge Kurzschlüssen oder Durchschlägen beobachtet.

Neben der vorzugsweisen Verwendung für Kondensatoren ist die erfindungsgemäße Folie jedoch auch für Kabelummantelungen anwendbar, wenn die Kabel imprägniert werden. Selbstverständliche Voraussetzung für die erfindungsgemäßen Folien ist, daß man einen Rohstoff einsetzt, der für Elektroanwendungen optimal ist, d.h. der einen sehr geringen Restaschegehalt aufweist, keine organischen bzw. anorganischen Gleitmittel enthält und frei ist von ionogenen Bestandteilen.

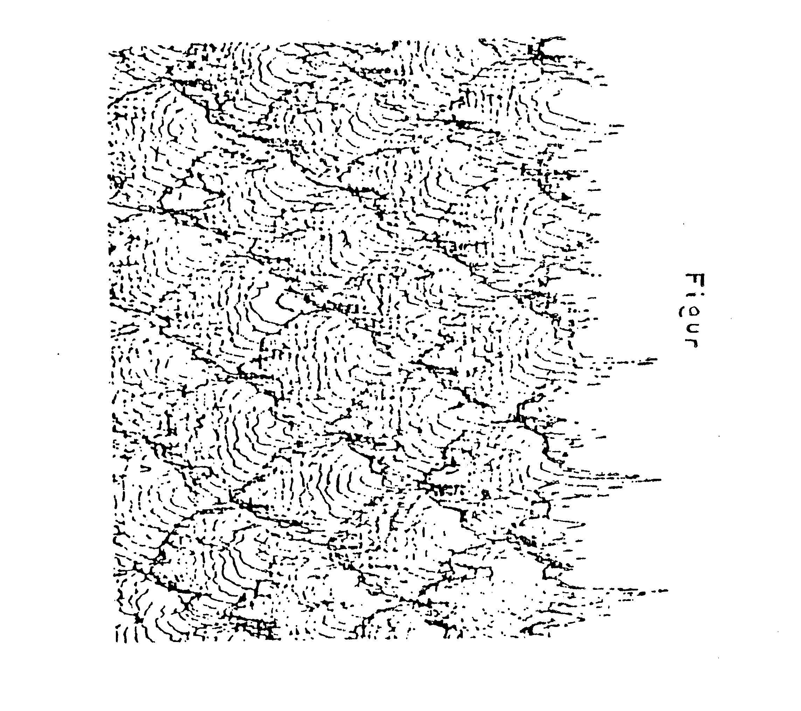

Die Figur stellt eine typische Rauhigkeitsmessung der erfindungsgemäßen Folie dar, aus der man gut die von den Bereichen mit hoher Rauhigkeit gebildeten, miteinander verbundenen Kanäle erkennen kann.

## Patentanspruch

Verfahren zur Herstellung einer rauhen Polypropylen-Elektroisolierfolie, bei dem eine schmelzextrudierte Vorfolie unter solchen Bedingungen abgekühlt wird, daß in dieser β-Kristallite entstehen, diese dann bei solcher Temperatur biaxial verstreckt wird, daß β-Kristallite in α-Kristallite umgewandelt werden, diese dann thermofixiert und gegebenenfalls metallisiert und aufgewickelt wird, dadurch gekennzeichnet, daß die Vorfolie vor dem Streckvorgang auf einer gerasterten Abzugswalze in aneinander grenzenden Bereichen so unterschiedlich abgekühlt und/oder auf einer gerasterten Streckwalze in aneinander grenzenden Bereichen so unterschiedlich erwärmt wird, daß auf der Folie Bereiche mit unterschiedlicher Rauhigkeit entstehen, wobei die Bereiche mit hoher Rauhigkeit miteinander verbundene Kanäle bilden.

## Claim

A process for the manufacture of a rough polypropylene film for use in the field of electrical insultation, which comprises cooling a melt-extruded prefilm under conditions such that β-crystallites form in said prefilm, stretching the prefilm biaxially at a temperature where β-crystallites are converted into α-crystallites, heat-setting, optionally metallizing and winding said film, the process being characterized in that, prior to the stretching step, the prefilm is differently cooled in adjacent zones on an engraved take-up roll and/or is differently heated in adjacent zones on an engraved stretching roll, such that zones of different roughness are produced on the film surface, with the zones of high roughness forming channels that are connected with each other.

## Revendication

Procédé pour la préparation d'une feuille de polypropylène rugueuse isolante électrique, dans lequel une feuille préliminaire extrudée à l'état fondu est refroidie dans des conditions telles qu'il se forme dans celle-ci des cristallites β, puis elle est soumise à un étirage biaxial à une température telle que les cristallites β sont transformés en cristallites α, puis elle est fixée à chaud et éventuellement métallisée et enroulée, caractérisé par le fait que la feuille préliminaire, avant l'opération d'étirage, est refroidie sur un cylindre récepteur gravé, de façon différentielle dans des zones contiguës, et/ou chauffée sur un cylindre d'étirage gravé, de façon différentielle dans des zones contiguës, telle qu'il se forme sur la feuille des zones à rugosité différente, les zones à forte rugosité formant des canaux reliés les uns aux autres.

Figur